Europäisches Patentamt

European Patent Office

Office européen des brevets

(19)

(11) **EP 1 071 281 B1**

(12) **EUROPEAN PATENT SPECIFICATION**

(45) Date of publication and mention
of the grant of the patent:
**04.06.2003 Bulletin 2003/23**

(51) Int Cl.7: **H04N 5/57**, H04N 5/66,
H04N 5/53

(21) Application number: **99907852.0**

(22) Date of filing: **03.03.1999**

(86) International application number:
**PCT/JP99/01019**

(87) International publication number:
**WO 99/045703 (10.09.1999 Gazette 1999/36)**

(54) **AUTOMATIC LUMINANCE ADJUSTMENT DEVICE AND METHOD**

VORRICHTUNG UND VERFAHREN ZUR AUTOMATISCHEN LUMINANZREGELUNG

DISPOSITIF AUTOMATIQUE DE REGLAGE DE LA LUMINANCE ET PROCEDE ASSOCIE

(84) Designated Contracting States:
**FR**

(30) Priority: **06.03.1998 JP 5468398**
**20.03.1998 JP 7213898**

(43) Date of publication of application:
**24.01.2001 Bulletin 2001/04**

(73) Proprietor: **MATSUSHITA ELECTRIC INDUSTRIAL
CO., LTD.
Kadoma-shi, Osaka 571-8501 (JP)**

(72) Inventors:
• **NAKAMURA, Takahiro, Room 203 EtoileA
Sapporo-shi, Hokkaido 007-0838 (JP)**
• **HATANO, Takahisa, Room 102 Lilac-heim
Sapporo-shi, Hokkaido 003-0831 (JP)**

• **OTOME, Takashi, Room 902
Sapporo-shi, Hokkaido 065-0033 (JP)**
• **FUNAMOTO, Taro
Ibaraki-shi, Osaka 567-0006 (JP)**

(74) Representative: **Lang, Johannes, Dipl.-Ing.
Bardehle Pagenberg Dost Altenburg Geissler
Isenbruck,
Postfach 86 06 20
81633 München (DE)**

(56) References cited:
**EP-A- 0 396 746        EP-A- 0 419 341
EP-A- 0 854 646        JP-A- 3 145 287
JP-A- 8 032 894        JP-A- 60 075 112
JP-A- 62 220 406       US-A- 4 628 362
US-A- 4 970 594**

**Description**

TECHNICAL FIELD

The present invention relates to automatic luminance adjustment devices and methods, and more particularly to, in video display devices which convert an analog video signal into a digital video signal for display (such as liquid crystal displays and plasma display panels), a luminance adjustment device and method automatically adjusting a black level and an amplitude of the analog video signal being inputted.

BACKGROUND ART

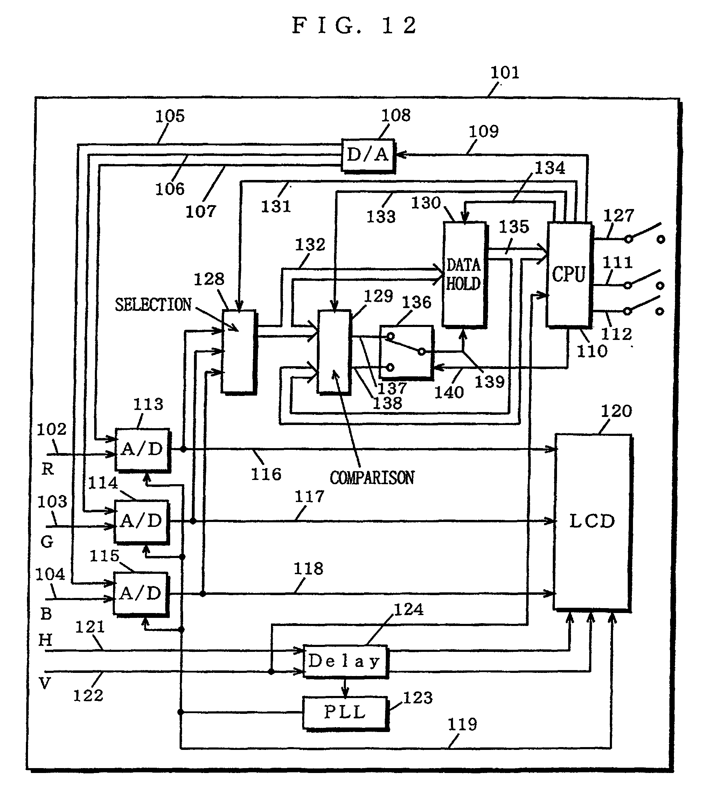

Conventionally, as devices for luminance adjustment adjusting contrast and brightness of video display devices which convert an analog video signal into a digital video signal for display, a device as disclosed in Japanese Utility Model Laid-Open Publication No. 6-60884 (1994-60884) titled "CONTRAST ADJUSTMENT CIRCUIT FOR COLOR LCD DEVICE" has been existed, for example. Now the automatic luminance adjustment device in the color LCD device disclosed in the above publication is described referring to FIG. 12.

FIG. 12 is a block diagram showing the structure of the above mentioned conventional automatic luminance adjustment device. In FIG. 12, a conventional automatic luminance adjustment device 101 includes: A/D converters 113 to 115; a D/A converter 108; a CPU 110; switches 111 and 112; an LCD 120; a PLL circuit 123; a horizontal/vertical synchronizing signal delay circuit 124; an automatic contrast adjustment switch 127; a video data selector 128; a comparator 129; a data holding circuit 130; and a selector switch 136.

An I/O port of the CPU 110 is supplied with a vertical synchronizing signal 122 for the purpose of detecting the generation of the vertical synchronizing signals. A/D-converted digital video data 116 to 118 is supplied to the video data selector 128, and therein, any one of R, G, or B is selected from among supplied data based on an RGB selection signal 131 transmitted from the CPU 110. Selected A/D converted digital video data 132 representing any one of R, G, or B is supplied to the comparator 129 and the data holding circuit 130. Data 135 held in the data holding circuit 130 is supplied to the comparator 129 to enable a comparison between the data 135 and the digital video signal 132. A comparison resultant signal 138 outputted when the comparison result satisfies

digital video data 132 > stored data 135

is selectable by the selector switch 136 with a selection signal 140 transmitted from the CPU 110. The result of selection is supplied to the data holding circuit 130 as a data holding signal 139 and held therein. The data holding circuit 130 then outputs data 135 indicating a maximum or minimum value at present.

Accordingly, reference voltages for each of the A/D converters 113 to 115 at present can be figured out. Further, those reference voltages can be optimally adjusted through a reference voltage transmitted to the D/A converter 108, which is also figured out from the maximum or minimum value of luminance data of the input signal detected in the data storing circuit 130. Note that, in the conventional example, although the reference voltages of the A/D converters 113 to 115 are subjected to control, the similar effect can be obtained by adjusting a black level or an amplitude of the analog video signal by using a video amplifier or the like at a stage prior to the A/D converters 113 to 115.

The method of automatically adjusting the luminance by detecting maximum and minimum values of the digital data as being implemented in the above conventional automatic luminance adjustment device, however, is easily affected by noise on the digital data, thereby causing the problem that the contrast can not be adjusted with stability.

To be more specific, when detecting the maximum value of the digital data, if a noise component of a larger data value than the original video signal appears even on a single pixel on a screen, the maximum value is determined based on the amplitude of noise component instead of the amplitude of the original analog video signal. As adjustment of the amplitude is carried out with reference to the determined maximum value, in this case, the amplitude of the adjusted video signal becomes smaller than it should be. In the actual device, noise is generated from various disturbances in transmission paths of the analog video signal, a power supply system of the device, and the like, and it is almost impossible to completely eliminate the noise on a screen. Consequently, with the above conventional automatic luminance adjustment method, due to direct influence of the noise, stable contrast adjustment is not achievable.

The following documents disclose other possibilities for automatic gain control of an input video signal.

The published European patent application No. EP 419 341 A1 describes a video signal receiver comprising an amplifier for keeping the video signal between predetermined limits; this is obtained by measuring the amplitude of the line synchronization pulse, comparing this amplitude with a given value and controlling the gain of the amplifier in such a way that the amplitude of the synchronization pulse is relatively constant.

The published European patent application No. EP 396 746 A1 describes an image receiver control apparatus whereby a clamp level reference signal, which is multiplexed with an image signal, is compared with a predetermined value and the result of this comparison is used to control an analog clamper.

The published US patent No. US 4 970 594 discloses a television video signal control system in which a double control takes place: in the first control circuit a portion of the TV signal, which has a constant amplitude e.g. a portion of the sync signal is detected and the detected signal is used in a feedback loop for controlling the gain of a gain control circuit; in the second control circuit, the clamp level (= the reference DC potential level of the TV video signal) is detected and the detected signal is used for controlling the clamp potential.

The published European patent application No. EP 854 646 A2, published on 22.07.1998, discloses an automatic gain control circuit for video signals whereby the clamped video signal is converted in an A/D converter into a digital data having a voltage between a predetermined reference voltage and a TOP voltage. A TOP voltage controller controls the TOP voltage of the A/D converter on the basis of a sample value extracted from the output of the A/D converter and a sync tip value of a standard signal.

The published US patent No. US 4 628 362 discloses a combined video AGC and digitizing circuit in which an active window is defined within an image area whereby the AGC is only operated on the active window in order to ensure that the active window is always displayed with proper brightness and contrast; to this end an upper threshold detector and a lower threshold detector are foreseen and if the magnitude of the picture information does not reach a given maximum value or a given minimum value, the gain of the A/D converter and the DC level of the intermediate input signal are changed accordingly in order to ensure that the full dynamic range of the A/D converter is used.

For all above described conventional automatic gain adjustment methods, it is essential to provide a dedicated-purpose circuit for performing the automatic adjustment which causes the supplementary problem that the circuit size of the entire video display device is increased.

Therefore, it is an object of the present invention to provide an automatic luminance adjustment device and method capable of performing stable and optimal contrast adjustment of an analog video signal without a circuit specially dedicated to luminance adjustment.

DISCLOSURE OF THE INVENTION

The object mentioned above is reached by an automatic luminance adjustment device according to independent claim 1 and by an automatic luminance adjustment method according to independent claim 8. The different embodiments disclosed in the dependent claims show supplementary ways for realizing said object.

One aspect of the present invention is directed to an automatic luminance adjustment device automatically adjusting luminance of an analog video signal inputted to a video display device by using a predetermined test signal of constant luminance, wherein

the luminance level of the test signal before A/D conversion is adjusted so that values of a video start coordinate and a video end coordinate detected from an A/D-converted luminance level of the test signal being inputted agrees with ideal coordinates determined from a waveform of the test signal.

Herein, a preferred configuration is as in another aspect of the present invention which is directed to an automatic luminance adjustment device automatically adjusting luminance of an analog video signal inputted to a video display device by using a predetermined test signal of constant luminance, comprising:

a video amplifier adjusting a luminance level of the test signal being inputted in accordance with instructions from control means;
A/D conversion means for sampling an output from the video amplifier for conversion to a digital test signal;
coordinate detection means for detecting a video start coordinate and a video end coordinate by comparing luminance data of the digital test signal outputted from the A/D conversion means and a luminance comparison value outputted from the control means; and
the control means for controlling the video amplifier so that each coordinate value detected by the coordinate detection means agrees with an ideal coordinate value determined from a waveform of the test signal.

Further, as in a third aspect of the present invention which is directed to an automatic luminance adjustment device automatically adjusting luminance of an analog video signal inputted to a video display device by using a predetermined test signal of constant luminance, comprising:

a video amplifier adjusting a luminance level of the test signal being inputted;
A/D conversion means for sampling an output from the video amplifier for conversion to a digital test signal in accordance with instructions from control means;
coordinate detection means for detecting a video start coordinate and a video end coordinate by comparing luminance data of the digital test signal outputted from the A/D conversion means and a luminance comparison value outputted from the control means; and
the control means for controlling the A/D conversion means so that each coordinate value detected by the coordinate detection means agrees with an ideal coordinate value determined from a waveform of the test signal.

As described above, in the different aspects above, after the predetermined test signal is inputted, the A/D-converted luminance data and the luminance comparison value is compared for feedback-control of the video amplifier so that each of video start coordinate and video end coordinate agrees with respective ideal coordinate values corresponding to the luminance comparison value. As a result, determination can be made on the adjustment values for the black level and amplitude of the analog video signal, that is, the luminance adjustment, for optimal A/D conversion without affected by noise. Further, since the coordinate detection means has been used for adjustment of the number of clocks for the A/D conversion means, or the like, it is not necessary to provide additional means for adjusting the luminance.

A fourth aspect of the present invention is directed to an automatic luminance adjustment device automatically adjusting luminance of an analog video signal inputted to a video display device, wherein

a video start coordinate and a video end coordinate are detected from comparison between an A/D-converted luminance level of the input analog video signal and a full scale of an output of A/D conversion means, and a luminance level of the input analog video signal before A/D conversion is adjusted so that a difference between the video start coordinate and the video end coordinate becomes minimum.

Herein, a preferred configuration is as in a fifth aspect of the present invention which is directed to an automatic luminance adjustment device automatically adjusting luminance of an analog video signal inputted to a video display device, comprising:

a video amplifier adjusting luminance of the input analog video signal in accordance with instructions from control means;
A/D conversion means for sampling an output from the video amplifier for conversion to a digital test signal;
coordinate detection means for detecting a video start coordinate and a video end coordinate by comparing luminance data of the digital video signal outputted from the A/D conversion means and a luminance comparison value outputted from the control means; and
the control means for controlling the video amplifier so that a difference between the video start coordinate and the video end coordinate detected by setting the luminance comparison value to a full scale of an output of the A/D conversion means becomes minimum.

Further, as in a sixth aspect of the present invention which is directed to an automatic luminance adjustment device automatically adjusting luminance of an analog video signal inputted to a video display device, comprising:

a video amplifier adjusting luminance of the input analog video signal;
A/D conversion means for sampling an output from the video amplifier for conversion to a digital video signal in accordance with instructions from control means;
coordinate detection means for detecting a video start coordinate and a video end coordinate by comparing luminance data of the digital video signal outputted from the AID conversion means and a luminance comparison value outputted from the control means; and
the control means for controlling the A/D conversion means so that a difference between the video start coordinate and the video end coordinate detected by setting the luminance comparison value to a full scale of an output of the A/D conversion means becomes minimum.

As described above, in the fourth to sixth aspects, the video amplifier is feedback-controlled so that the difference between the video start coordinate and the video end coordinate of the arbitrary analog video signal inputted thereto becomes minimum. Accordingly, without using the specific test signal, maximum luminance of the arbitrary analog video signal can be matched with a full scale of the output of the A/D conversion means, thereby enabling the determination of the amplitude adjustment value of the analog video signal, that is the luminance adjustment, realizing the optimal A/D conversion. Further, since the coordinate detection means has been already used for adjustment of the number of clocks for the A/D conversion means, or the like, it is not necessary to newly provide the circuit dedicated to luminance adjustment. Still further, in the fourth to sixth aspects, the specific test signal is not required, enabling not only the pre-shipment adjustment but also an user-adjustment in actual use.

A seventh aspect of the present invention is directed to an automatic luminance adjustment method automatically adjusting luminance of an analog video signal inputted to a video display device by using a predetermined test signal of constant luminance, wherein

the luminance level of the test signal before A/D conversion is adjusted so that values of a video start coordinate and a video end coordinate detected from an A/D-converted luminance level of the test signal being inputted agrees with ideal coordinates determined from a waveform of the test signal.

Herein, a preferred configuration is as in an eighth aspect of the present invention which is directed to an automatic luminance adjustment method automatically adjusting luminance of an analog video signal Inputted to a video display device by using a predetermined test signal of constant luminance, comprising:

a step of adjusting a luminance level of the test signal being inputted;
a step of sampling an output in the adjusting step for conversion to a digital test signal;

a step of detecting a video start coordinate and a video end coordinate by comparing luminance data of the digital test signal outputted in the conversion step and a luminance comparison value outputted in a controlling step; and

the step of controlling the luminance level of the test signal before digitization so that each coordinate value detected in the detecting step agrees with an ideal coordinate value determined from a waveform of the test signal.

As described above, in the seventh and eighth aspects, after the predetermined test signal is inputted, the A/D-converted luminance data and the luminance comparison value is compared for feedback-control of the luminance level of the test signal before digitization so that each of the video start coordinate and the video end coordinate agrees with respective ideal coordinate values corresponding to the luminance comparison value. Accordingly, the determination of the black level adjustment value and the amplitude adjustment value of the analog video signal, that is, the luminance adjustment, realizing the optimal A/D conversion free from the effect of noise is achieved.

A ninth aspect of the present invention is directed to an automatic luminance adjustment method automatically adjusting luminance of an analog video signal inputted to a video display device, wherein

a video start coordinate and a video end coordinate are detected from comparison between an A/D-converted luminance level of the input analog video signal and a full scale of an output of AID conversion processing, and a luminance level of the input analog video signal before A/D conversion is adjusted so that a difference between the video start coordinate and the video end coordinate becomes minimum.

Herein, a preferred configuration is as in a tenth aspect of the present invention which is directed to an automatic luminance adjustment method automatically adjusting luminance of an analog video signal inputted to a video display device, comprising:

a step of adjusting luminance of the input analog video signal;

a step of sampling an output in the adjusting step for conversion to a digital video signal;

a step of detecting a video start coordinate and a video end coordinate by comparing luminance data of the digital video signal outputted in the conversion step and a luminance comparison value outputted in a controlling step; and

the step of controlling the luminance level of the analog video signal before digitization so that a difference between the video start coordinate and the video end coordinate detected by setting the luminance comparison value to a full scale of an output in the conversion step becomes minimum.

As described above, in the ninth and tenth aspects, the luminance level of the analog video signal before digitization is feedback-controlled so that the difference between the video start coordinate and the video end coordinate of the arbitrary analog video signal being inputted becomes minimum. Accordingly, without using the specific test signal, maximum luminance of the arbitrary analog video signal can be matched with the full scale of the output in the conversion step, thereby enabling the determination of the amplitude adjustment value of the analog video signal, that is the luminance adjustment, realizing optimal A/D conversion. Further, in the ninth and tenth aspects, the specific test signal is not required, enabling not only the pre-shipment adjustment but also an user-adjustment in actual use.

BRIEF DESCRIPTION OF THE DRAWINGS

FIG. 1 is a block diagram showing the structure of an automatic luminance adjustment device according to a first embodiment of the present invention.
FIG. 2 is a block diagram showing the detailed structure of an accumulator circuit **42** shown in FIG. 1.
FIG. 3 is a diagram showing an exemplary relation between an input test signal and region setting pulses.
FIG. 4 is a diagram illustrating an add operation in the accumulator circuit **42**.
FIG. 5 is a flowchart showing an example of the procedural flow of an automatic luminance adjustment method according to the first embodiment of the present invention.
FIG. 6 is a block diagram showing the structure of the automatic luminance adjustment device according to second and third embodiments of the present invention.
FIG. 7 is a diagram showing an example of a luminance distribution in relation to a horizontal coordinate when a ramp signal is inputted.
FIG. 8 is a flowchart showing an example of the procedural flow of an automatic luminance adjustment method according to the second embodiment of the present invention.
FIG. 9 is a diagram showing an example of the luminance distribution in relation to the horizontal coordinate during when amplitude adjustment is carried out using an automatic luminance adjustment method according to the third embodiment of the present embodiment.
FIG. 10 is a diagram showing an example of the luminance distribution in relation to the horizontal coordinate after the amplitude adjustment using the automatic luminance adjustment method according to the third embodiment of the present embodiment.
FIG. 11 is a flowchart showing an example of the procedural flow of the automatic luminance adjustment method according to the third embodiment of the present invention.

FIG. 12 is a block diagram exemplarily showing the structure of a conventional automatic luminance adjustment device.

BEST MODES FOR CARRYING OUT THE INVENTION

(First Embodiment)

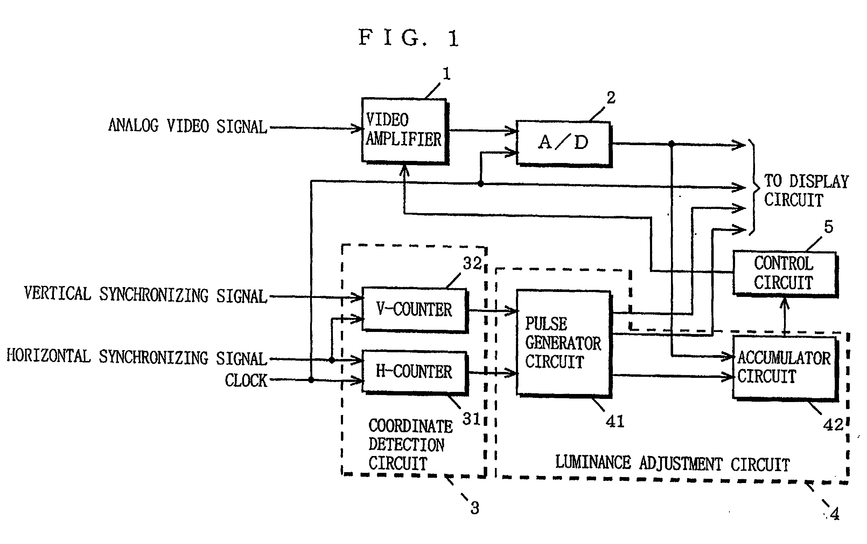

A first embodiment of the present invention is a device automatically performing optimal luminance adjustment without adverse effects of noise by utilizing a circuit dedicated to luminance adjustment and a test signal. Hereinafter, the first embodiment of the present invention is described by referring to FIGS. 1 to 5.

FIG. 1 is a block diagram showing the structure of the automatic luminance adjustment device according to the first embodiment of the present invention. In FIG. 1, the automatic luminance adjustment device of this embodiment includes: a video amplifier 1; an A/D converter 2; a coordinate detection circuit 3; a luminance adjustment circuit 4; and a control circuit 5. The coordinate detection circuit 3 is provided with a horizontal counter 31 and a vertical counter 32, and the luminance adjustment circuit 4 is provided with a pulse generator circuit 41 and an accumulator circuit 42.

An analog video signal is supplied to the video amplifier 1. The video amplifier 1 adjusts the black level and amplitude of the received analog video signal. With this procedure, the dynamic range of the following A/D converter 2 can be effectively utilized, and adjustment for white balance of each color of RGB becomes possible. For example, the black level adjustment is carried out by brightness control in the video amplifier 1, in general, by varying a DC voltage applied to an input terminal provided on the video amplifier 1 for brightness control. The white balance adjustment is carried out by sub-contrast control and sub-brightness control in the video amplifier 1, generally by varying each DC voltage applied to input terminals provided on the video amplifier 1 for each of sub-contrast control and sub-brightness control. The input terminals for sub-contrast control and sub-brightness control are both provided for each color of RGB, individually, thus each color of RGB is independently adjusted in its contrast and brightness for the white balance adjustment.

The A/D converter 2 converts the output from the video amplifier 1 to a digital video signal in synchronization with each clock pulse to be supplied thereto. The digital video signal is supplied to a display circuit (e.g., liquid crystal panel) and the luminance adjustment circuit 4. The coordinate detection circuit 3 is a known circuit for optimally adjusting the number of clocks for the A/D converter 2 and display positions on the screen. The horizontal counter 31 and the vertical counter 32 included in the circuit are utilized in the first embodiment.

The horizontal counter 31 counts up the number of clocks starting from an input of the horizontal synchronizing signal and outputs its count value to the pulse generator circuit 41. Similarly, the vertical counter 32 counts up the number of the horizontal synchronizing signals starting from an input of the vertical synchronizing signal and outputs its count value to the pulse generator circuit 41.

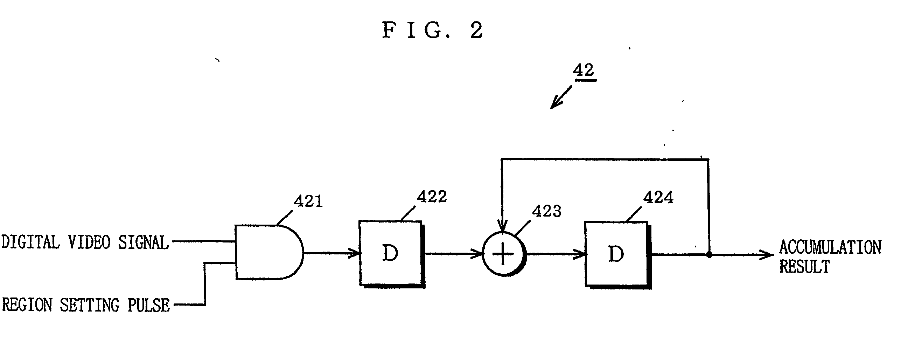

The luminance adjustment circuit 4 is responsible for luminance adjustment and provided with the pulse generator circuit 41 and the accumulator circuit 42. The pulse generator circuit 41 receives the count values from each of the horizontal counter 31 and the vertical counter 32 and generates a region setting pulse predetermined based on the received count values. The pulse generator circuit 41 also generates the horizontal synchronizing signal and the vertical synchronizing signal for output to the display circuit. The accumulator circuit 42 receives the digital video signal outputted from the A/D converter 2 and the region setting pulse from the pulse generator circuit 41 and accumulates only video signal data in the region corresponding to the timing of the region setting pulse. The detailed structure of the accumulator circuit 42 is shown in FIG. 2. FIG. 2 is a block diagram showing the exemplary structure of the accumulator circuit 42 in detail. In FIG. 2, the accumulator circuit 42 includes an AND circuit 421, D-type flip-flops 422 and 424, and an adder 423. As shown in FIG. 2, the accumulator circuit 42 obtains the result of the above described accumulation by extracting, in the AND circuit 421, only the video signal data within the region given by the region setting pulse, and then by feeding back the output of the D-type flip-flop 424 to the adder 423.

The control circuit 5 calculates average luminance data (luminance data per pixel) from the result of accumulation received from the accumulator circuit **42**, generates DC voltages for adjustment of the black level and the amplitude in the video amplifier 1, and outputs the generated voltages thereto. The control circuit 5 may be a microcontroller, for example, and is also conventionally has been used for adjustment of the number of clocks for the A/D converter 2, and the like.

Described next is a specific example of an automatic luminance adjustment method carried out by the automatic luminance adjustment device according to the first embodiment of the present invention.

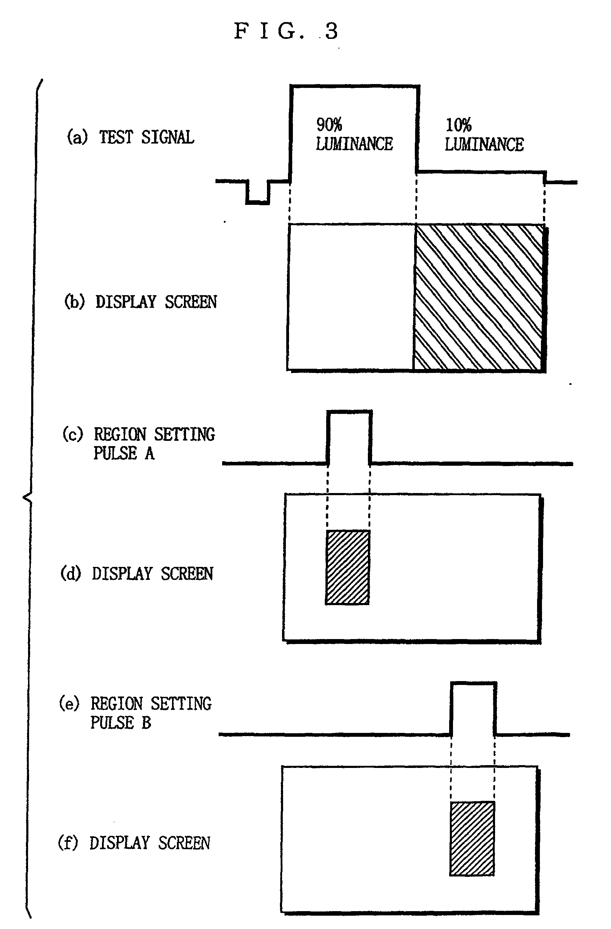

It is considered a case, for example, where a test signal (FIG. 3(a)) which enables display of, as shown in FIG. 3(b), the left half of the screen with all-white (luminance 90%) and the right half thereof with all-black (luminance 10%) is inputted. Herein, the test signal to be inputted is assumed to have the luminance of 90% and 10% for the reason that, with 100% and 0% luminance, the output of the A/D converter 2 is limited and consequently, the correlation between the detection result and the intended black level and amplitude is lost.

When the test signal shown in FIG. 3(a) is supplied, based on the count values from the horizontal counter 31 and vertical counter 32, the pulse generator circuit 41 generates a region setting pulse A (FIG. 3(c)) for selecting the central portion of the left half of the screen as shown in FIG. 3 (d) . In the same manner, the pulse generator circuit 41 generates a region setting pulse B (FIG.3(e)) for selecting the central portion of the right half of the screen as shown in FIG. 3(f). The generated pulses A and B can be freely set as long as enabling partial extraction of signal data of all-white portion (luminance 90%) and all-black portion (luminance 10%), respectively. Note that herein, it is not preferable to use region setting pulses extracting the signal data of the entire regions, which may lead to the influence from, for example, a top-curl caused by unstable operation of a PLL (Phase Locked Loop). In a case of detecting a region of horizontally 100 dots and vertically 30 lines, the pulse generator circuit 41 generates the region setting pulses of pulse width corresponding to horizontally 100 dots for vertically 30 lines.

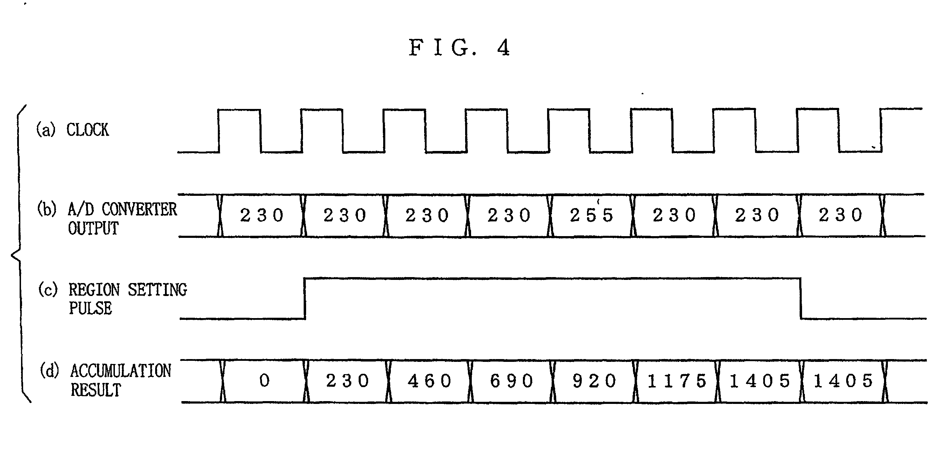

The accumulator circuit 42 separately accumulates the signal data in each of regions corresponding to respective timings of the region setting pulses A and B generated in the pulse generator circuit **41**(regions shown in FIGS. 3(d) and 3 (f)) . FIG. 4 shows a timing chart of the signal data to be accumulated. FIG. 4(b) is digital video signal data outputted from the A/D converter 2. FIG. 4(c) is the region setting pulse corresponding to FIG. 3(c) or FIG. 3(e) supplied from the pulse generator circuit **41** The accumulator circuit 42 adds the data sent from the AD converter 2 (FIG. 4(b)) only during the time interval when the region setting pulse (FIG. 4(c)) is supplied from the pulse generator circuit **41** In FIG. 4, the data is accumulated during the time interval of six clocks (pixel number of six). The result of the accumulation is supplied from the accumulator circuit 42 to the control circuit 5.

The control circuit 5 divides the result of accumulation for the region setting pulse A (FIG. 3(c)) outputted by the accumulator circuit 42 by the number of pixels (number of samples) included in the time interval of the region setting pulse A. In this manner, the average luminance data is calculated. Similarly, the control circuit 5 divides the result of accumulation for the region setting pulse B (FIG. 3(e)) outputted by the accumulator circuit 42 by the number of pixels included in the time interval of the region setting pulse B to obtain the average luminance data. In this example, the number of pixels is horizontally 100 dots, thus in both cases, each result of accumulation is divided by 100. Thereafter, based on the calculated average luminance data, the control circuit 5 generates and outputs DC voltages to the video amplifier 1 for adjusting the black level and amplitude to desired ones.

In the above described example, adjustment is conducted by the input signal shown in FIG. 3(a). In such case, when the A/D converter 2 is assumed to have 8-bit performance, the control circuit 5 generates such DC voltages for contrast adjustment in the video amplifier 1 that the average luminance data becomes 230 ($\fallingdotseq$ 255 X 0.9) for the region setting pulse A which corresponds to the region where the luminance of the input signal indicating 90%. Similarly, the control circuit 5 generates such DC voltage for brightness adjustment in the video amplifier 1 that the average luminance data of the input signal becomes 25 ($\fallingdotseq$ 255 X 0.1) for the region setting pulse B which corresponds to the region where the luminance of the input signal indicating 10%. For example, if a signal of 90% luminance is supplied but the contrast thereof is the half of a desired level (for simplification, brightness thereof is assumed to be optimal) , the data supplied from the A/D converter 2 is 115 ($\fallingdotseq$ 255 X 0.9 X0.5). The control circuit 5 then controls the DC voltages to be outputted to the video amplifier 1 so that the contrast becomes 1 from 0.5.

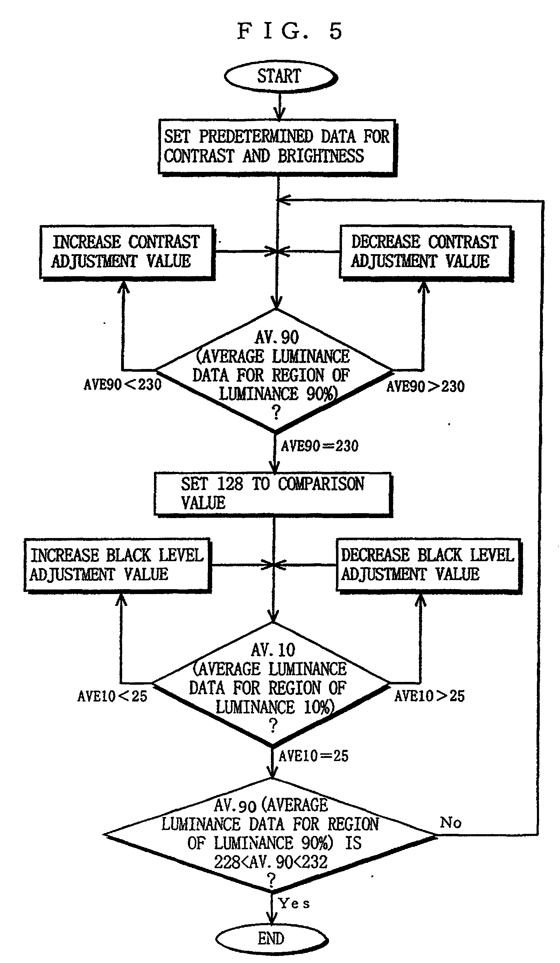

After adjusting the contrast with luminance of 90%, the brightness is adjusted with luminance of 10%. Such adjustment, however, causes deviation of the detection result with luminance of 90%. The control circuit 5 therefore again performs contrast adjustment. In this manner, the automatic luminance adjustment device according to the first embodiment of the present invention repeatedly adjusts the contrast and brightness so that the luminance outputted from the A/D converter 2 becomes the desired average luminance in both cases of 90% and 10% luminance. FIG. 5 is a flowchart showing the procedural flow of an automatic luminance adjustment method according the first embodiment described in the above.

Next, described below is the comparison between the automatic luminance adjustment method according to the first embodiment and the conventional automatic luminance adjustment method. The case where the present contrast is half in value and the noise of 150 in value appears on one pixel of the data outputted from the A/D converter 2 is considered, for example. In this example, in the foregoing conventional automatic luminance adjustment method, the noise of 150 is simply detected as the maximum value, and thus the contrast is brought up from 0.5 only to approximately 0.76 in order to adjust the luminance from the detected maximum value of 150 to the desired value of 230. As such, in the conventional automatic luminance adjustment method, correct contrast adjustment is disturbed by the noise on a single pixel.

On the other hand, in the automatic luminance adjustment method according to the first embodiment of the present invention, the average luminance data is calculated from the luminance data of the predetermined area. As a result, even if the digital data noise of 150 appears on one pixel, provided that the number of pixels for the detection (that is, the number of pixels included in the period of the region setting pulse) is 30,000, the average luminance data is calculated as (29,999 X 115 + 150) / 30,000 $\fallingdotseq$ 115, thereby eliminating the effect of the noise. Accordingly, the A/D converter 2 is supplied with the input to the fullest of its the dynamic range, and as a result, the optimal contrast and brightness can be attained without the effect of the noise.

As described in the foregoing, according to the automatic luminance adjustment device and method of the first embodiment, the luminance adjustment is carried out by calculating the average luminance data for the predetermined area using the predetermined test signal (e.g. FIG. 3(a)), thereby achieving the optimal contrast and brightness adjustment free from the effect of the noise.

Further, in the automatic luminance adjustment device and method of the first embodiment, it is possible to adjust, at the time of pre-shipment adjustment work on the production line, any deviation of contrast, brightness, white balance, or the like caused by component-to-component variations in analog circuits or by characteristics variation of the A/D converter 2. Furthermore, such adjustment is possible also by a user in actual use, by using the test signal (e.g. FIG. 3(a)) generated as image data, for example, a bit map file or by using a distributed test signal in a form of floppy disk, or the like.

Note, in the above first embodiment, the example is described, wherein the test signal realizing a screen display of all-white (luminance 90%) on the left half and all-black (luminance 10%) on the right half (FIG. 3(a)) is inputted. The automatic luminance adjustment device and method according to the first embodiment of the present invention, however, is not limited to the use of such test signal, but any test signal will do as long as the region setting pulse generated in the pulse generator circuit 41 is set in correspondence therewith.

Still further, in the above described first embodiment, the control circuit 5 controls the video amplifier 1 based on the calculated average luminance data to obtain the optimal luminance. However, in the automatic luminance adjustment device and method according to the first embodiment of the present invention, if the control circuit 5 controls the A/D converter 2, same effects can also be attained.

(Second Embodiment)

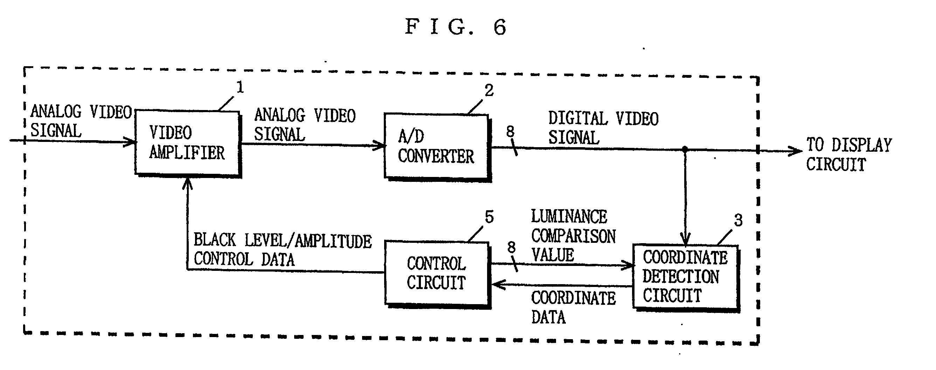

A second embodiment of the present invention is a device automatically performing optimal luminance adjustment without a circuit dedicated thereto but by using only a test signal. Hereinafter, the second embodiment of the present invention is described by referring to FIGS. 6 to 8.

FIG. 6 is a block diagram showing the structure of the automatic luminance adjustment device according to the second embodiment of the present invention. In FIG. 6, the automatic luminance adjustment device of this embodiment includes the video amplifier 1, the A/D converter 2, the coordinate detection circuit 3, and the control circuit 5.

An analog video signal is supplied to the video amplifier 1. The video amplifier 1 adjusts the black level and amplitude of the received analog video signal. With this procedure, the dynamic range of the following A/D converter 2 can be effectively utilized, and adjustment for white balance of each color of RGB becomes possible.

The A/D converter 2 sequentially converts the output from the video amplifier 1 to an 8-bit digital video signal in synchronization with each clock to be supplied thereto. The digital video signal is supplied to a display circuit (such as liquid crystal panel) and the coordinate detection circuit 3. The coordinate detection circuit 3 is a known circuit for optimally adjusting the number of clocks for the A/D converter 2 and display positions on the screen. Herein, the coordinate detection circuit 3 detects a video start coordinate and a video end coordinate by comparing luminance data supplied from the A/D converter 2 with a comparison value. The control circuit 5 controls the video amplifier 1 by generating DC voltages for adjustment of the black level and amplitude in the video amplifier 1 in accordance with the video start/end coordinate data detected by the coordinate detection circuit 3. The control circuit 5 may be a microcontroller, for example, and has been conventionally used for adjustment of the number of clocks for the A/D converter 2, and the like.

Described next is a specific example of an automatic luminance adjustment method carried out in the automatic luminance adjustment device according to the second embodiment of the present invention.

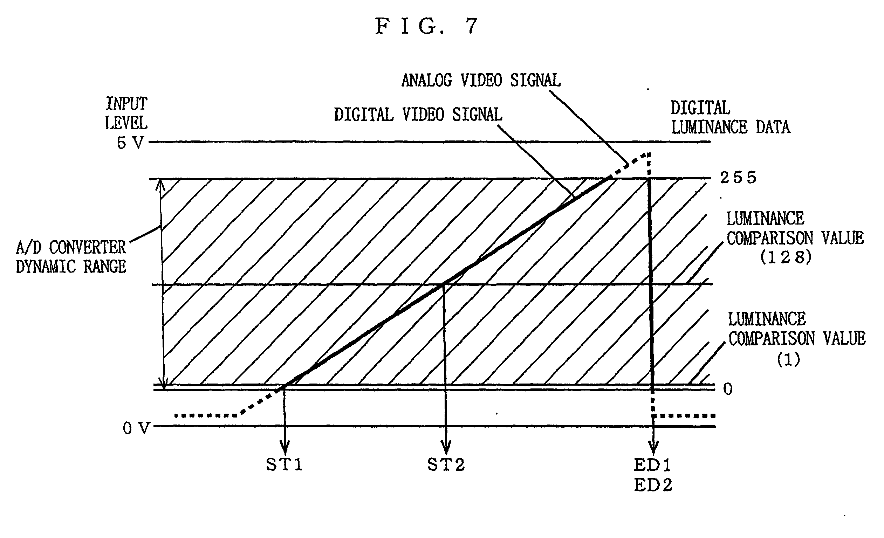

FIG. 7 is a diagram showing a luminance distribution of the video signal in relation to the horizontal coordinate when a ramp signal having horizontally 1,024 video pixels is supplied. Herein, as the black level and amplitude of the analog video signal are not optimized for the A/D converter 2 (exceeding dynamic range thereof), the A/D-converted digital signal causes saturation of white color and low-fineness of black color. Note that ST1 and ED1 shown in FIG. 7 denote the video start coordinate (ST1) and the video end coordinate (ED1), respectively under the condition that the luminance comparison value for the video start/end coordinate detection is set to "1". ST2 and ED2 in the same manner denote the video start coordinate (ST2) and the video end coordinate 2 (ED2), respectively when the luminance comparison value for the detection is "128".

At this time, it is assumable that the coordinate difference between ED1 and ST1 becomes 1,020 ($\fallingdotseq$ 1,024 - 1,024 X1 / 255) if the number of clocks for A/D conversion is optimally adjusted and the black level and amplitude of the analog video signal are optimized for the ramp signal when received at the A/D converter 2. Correspondingly, the coordinate difference between ED2 and ST2 is assumed to be 510 ($\fallingdotseq$ 1,024 - 1,024 X128 / 255).

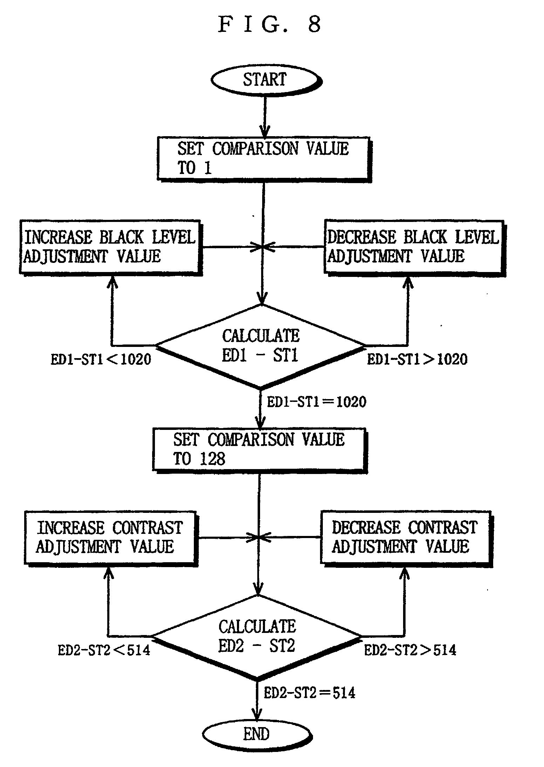

Accordingly, the control circuit 5 first sets the luminance comparison value as "1" for output to the coordinate detection circuit 3, and controls the video amplifier 1 so that the coordinate difference (= ED1 - ST1) becomes 1,020 to adjust the black level. Secondly, the control circuit 5 resets the luminance comparison value to "128" for output to the coordinate detection circuit 3, and controls the video amplifier 1 so that the coordinate difference (= ED2 - ST2) becomes 510 to adjust the amplitude. In this manner, the optimal values for black level and amplitude of the analog video signal for the A/D converter 2 can be determined by the video amplifier 1. FIG. 8 is a flowchart showing the procedural flow of an automatic luminance adjustment method according the second embodiment described in the above.

As described in the foregoing, according to the automatic luminance adjustment device and method of the second embodiment of the present invention, after the predetermined test signal (e.g. FIG. 7) is supplied, comparison is carried out between the luminance data of the A/D-converted test signal and the luminance comparison value. Thereafter the video amplifier 1 is feedback-controlled so as to adjust the video start coordinate and the video end coordinate of the test signal to agree with the respective ideal coordinate values corresponding to the luminance comparison value. As a result, the automatic luminance adjustment device and method according to the second embodiment is able to determine the adjustment values for the black level and amplitude of the analog video signal, that is, the luminance adjustment, for optimal A/D conversion without affected by noise. Further, since the coordinate detection circuit 3 is the component which has been already used for adjustment of the number of clocks for the A/D converter 2, or the like, it is not necessary to provide an additional circuit dedicated to luminance adjustment for the automatic luminance adjustment device and method according to the second embodiment.

Note that, in the above second embodiment, it is described the case where the black level and amplitude are adjusted when the luminance comparison values are set as "1" and "128", respectively. The present invention, however, is not limited to the case but a plurality of luminance comparison values other than the above can be applied for similar processing. Moreover, the A/D converter 2 in the above second embodiment is described to convert the output of the video amplifier 1 to the 8-bit digital video signals. The present invention, however is not limited to the use of the A/D converter 2 but can use any A/D converter which converts the analog signal into a digital signal other than 8-bit for the similar luminance adjustment. Note, in such cases, it is necessary to detect the coordinate difference between the video start coordinate and the video end coordinate by setting the appropriate number of luminance comparison values correspondingly to the number of signal bits.

(Third Embodiment)

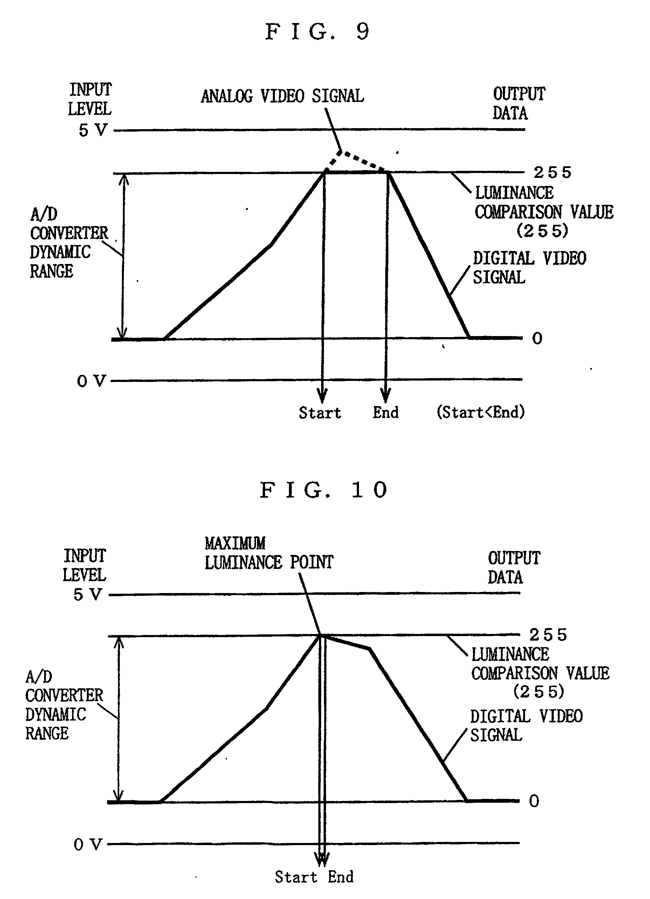

A third embodiment of the present invention is a device automatically performing optimal luminance adjustment without a circuit dedicated thereto and also without using a test signal. Hereinafter, the third embodiment of the present invention is described by referring to FIGS. 9 to 11.

The structure of the automatic luminance adjustment device according to the third embodiment of the present invention is the same as that according to the second embodiment as shown in FIG. 6, and therefore, the same reference numerals are assigned herein and the description thereof is partially omitted.

First, the control circuit 5 sets the luminance comparison value supplied to the coordinate detection circuit 3 to the full scale of an output of the A/D converter 2, that is, to "255", and then sets an amplitude adjustment value for the analog amplifier 1 to a maximum value. At this time, as shown in FIG. 9, the high-luminance region of the.analog video signal exceeds the dynamic range of the A/D converter 2, causing white color saturation in the digital video signal.

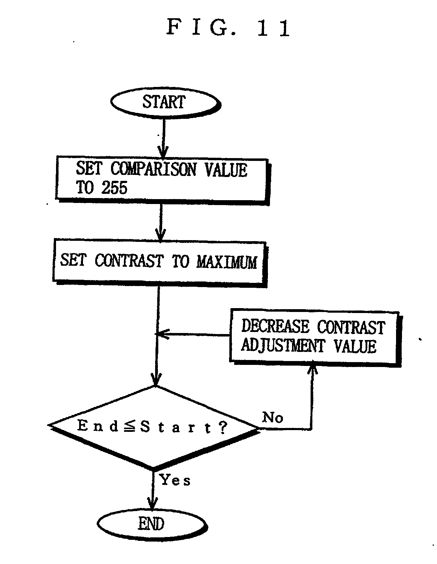

Next, the control circuit 5 gradually brings down, from the maximum value, the amplitude adjustment value of the video amplifier 1 to decrease the amplitude until the amplitude at which the coordinate difference between the video start coordinate and the video end coordinate becomes minimum. A luminance distribution of the video signal at this time is shown in FIG. 10 in relation to the horizontal coordinate. Note that Start and End shown in the FIGS. 9 and 10 denote the video start coordinate (Start) and the video end coordinate (End) detected in the coordinate detection circuit 3. FIG. 11 is a flowchart showing the procedural flow of an automatic luminance adjustment method according the third embodiment described in the above.

As described in the foregoing, according to the automatic luminance adjustment device and method of the third embodiment of the present invention, the video amplifier 1 is feedback-controlled so that the coordinate difference of the video start coordinate and the video end coordinate of an arbitrary analog video signal inputted thereto becomes minimum. Accordingly, the automatic luminance adjustment device and method according to the third embodiment can match the maximum luminance of the arbitrary analog video signal with the full scale of the output of the A/D converter 2 without using a specific test signal, thereby enabling the determination of the amplitude adjustment value of the analog video signal, that is, the luminance adjustment, realizing the optimal A/D conversion. Further, since the coordinated detection circuit 3 is the component which has been already used for adjustment of the number of clocks for the A/D converter 2, or the like, it is not necessary to provide an additional circuit dedicated to the luminance adjustment. Still further, since the automatic luminance adjustment device and method according to the third embodiment does not require the specific test signal, adjustment can be made not only at the factory pre-shipment adjustment but also by a user in actual use.

Note, in the above described second and third embodiments, to obtain the optimal luminance, the control circuit 5 controls the video amplifier 1 according to the detected video start coordinate and the video end coordinate. In the automatic luminance adjustment device and method of the second and third embodiments, however, even if the control circuit 5 controls the A/D converter 2, the optimal luminance can be obtained.

INDUSTRIAL APPLICABILITY

As described in the foregoing, the present invention can be implemented in the video display devices (such as liquid crystal displays or plasma display panels) which convert an analog video signal into a digital video signal for display, and can be used for adjusting the black level and amplitude of the analog video signal being inputted.

**Claims**

1. An automatic luminance adjustment device automatically adjusting luminance (black level and amplitude) of an analog video signal inputted to a video display, comprising:

    a video amplifier (1) for controlling the black level and the amplitude of the analog video signal;
    an A/D converter (2) for carrying out A/D conversion of an output of said video amplifier (1) into a digital video signal;

    **characterized by**:

    a coordinate detection circuit (3) for detecting a video start coordinate (ST1) and a video end coordinate (ED1) on said video display by comparing luminance data of said digital video signal with a set comparison value; and

    a control circuit (5) for setting and supplying said comparison value to said coordinate detection circuit (3) in order to obtain said video start coordinate and said video end coordinate, and controlling said video amplifier (1) so that a difference between the video start coordinate (ST1) and the video end coordinate (ED1) becomes a predetermined value.

2. The automatic luminance adjustment device according to claim 1, wherein a ramp-wave signal is fed to said video amplifier (1) instead of the analog video signal, and controlled in black level and amplitude.

3. The automatic luminance adjustment device according to claim 2, wherein a minimum value of a dynamic range in the A/D conversion and an arbitrary value between the minimum value and a maximum value of the dynamic range are used as said comparison values.

4. The automatic luminance adjustment device according to claim 3, wherein the black level is controlled so that a difference between a video start coordinate and a video end coordinate obtained from the minimum value of said dynamic range becomes a first predetermined value, and
the amplitude is controlled so that a difference between a video start coordinate and a video end coordinate obtained from the minimum value of said dynamic range becomes a second predetermined value.

5. The automatic luminance adjustment device according to claim 1, wherein said analog video signal is so controlled by said video amplifier as to cause white color saturation in the dynamic range in the A/D conversion.

6. The automatic luminance adjustment device according to claim 5, wherein a maximum value of a dynamic range in the A/D conversion is used as said comparison value.

7. The automatic luminance adjustment device according to claim 6, wherein the luminance of the analog video signal is adjusted so that the difference between the video start coordinate and the video end coordinate obtained by using said comparison value becomes minimum.

8. A method of automatically adjusting luminance (black level and amplitude) of an analog video signal inputted to a video display, the method comprising the steps of.
controlling (1) the black level and the amplitude of the analog video signal;
carrying out A/D conversion (2) of the controlled analog video signal into a digital video signal;
**characterized in that** the method further comprises:

    detecting a video start coordinate (ST1) and a video end coordinate (ED1) on said video display by comparing luminance data of said digital video signal with a comparison value; and controlling the black level and amplitude of said analog video signal so that a difference between the video start coordinate and the video end coordinate detected in said detecting step becomes a predetermined value.

9. The automatic luminance adjustment method according to claim 8, wherein

in said controlling step, a ramp-wave signal is fed and controlled in black level and amplitude instead of said analog video signal.

10. The automatic luminance adjustment method according to claim 9, wherein
a minimum value of a dynamic range in the A/D conversion and an arbitrary value between the minimum value and a maximum value of the dynamic range are used as said comparison value.

11. The automatic luminance adjustment method according to claim 10, wherein
the black level is controlled so that a difference between a video start coordinate and a video coordinate obtained from the minimum value of said dynamic range becomes a first predetermined value, and the amplitude is controlled so that a difference between a video start coordinate and a video end coordinate obtained from the arbitrary value of said dynamic range becomes a second predetermined value.

12. The automatic luminance adjustment method according to claim 10, wherein
said analog video signal is so controlled as to cause white color saturation in the dynamic range in the A/D conversion.

13. The automatic luminance adjustment method according to claim 12, wherein
a maximum value of a dynamic range in the A/D conversion is used as said comparison value.

14. The automatic luminance adjustment method according to claim 13, wherein
the luminance of the analog video signal is adjusted so that the difference between the video start coordinate and the video end coordinate obtained by using said comparison value becomes minimum.

**Patentansprüche**

1. Vorrichtung zur automatischen Luminanzregelung, welche automatisch die Luminanz regelt (Schwarzpegel und Amplitude) eines analogen Videosignals, welches in eine Videoanzeige eingegeben wird, welche aufweist:

einen Videoverstärker (1) zum Steuern des Schwarzpegels und der Amplitude des analogen Videosignals;
einen A/D-Wandler (2) zum Durchführen der A/D-Wandlung einer Ausgabe des Videoverstärkers (1) in ein digitales Videosignal;

**gekennzeichnet durch**:

einen Koordinatendetektionsschaltkreis (3) zum Detektieren einer Videoanfangskoordinate (ST1) und einer Videoendkoordinate (ED1) auf der Videoanzeige **durch** Vergleichen von Luminanzdaten des digitalen Videosignals mit einem gesetzten Vergleichswert; und
einen Steuerschaltkreis (5) zum Setzen und Bereitstellen des Vergleichswerts an den Koordinatendetektionsschaltkreis (3), um die Videoanfangskoordinate und die Videoendkoordinate zu erhalten, und zum Steuern des Videoverstärkers (1), so dass eine Differenz zwischen der Videoanfangskoordinate (ST1) und der Videoendkoordinate (ED1) zu einem vorherbestimmten Wert wird.

2. Vorrichtung zur automatischen Luminanzregelung gemäß Anspruch 1, wobei ein Sägezahn-Wellensignal in den Videoverstärker (1) eingespeist wird anstatt des anlogen Videosignals und in Schwarzpegel und Amplitude gesteuert wird.

3. Vorrichtung zur automatischen Luminanzregelung gemäß Anspruch 2, wobei ein Minimalwert eines dynamischen Bereichs in der A/D-Wandlung und ein willkürlicher Wert zwischen dem Minimalwert und einem Maximalwert des dynamischen Bereichs verwendet werden als die Vergleichswerte.

4. Vorrichtung zur automatischen Luminanzregelung gemäß Anspruch 3, wobei der Schwarzwert so gesteuert wird, dass eine Differenz zwischen einer Videoanfangskoordinate und einer Videoendkoordinate, welche von dem Minimalwert des dynamischen Bereichs erhalten werden, ein erster vorbestimmter Wert wird, und
die Amplitude so gesteuert wird, dass eine Differenz zwischen einer Videoanfangskoordinate und einer Videoendkoordinate, welche von dem Minimalwert des dynamischen Bereichs erhalten werden, ein zweiter vorbestimmter Wert wird.

5. Vorrichtung zur automatischen Luminanzregelung gemäß Anspruch 1, wobei das analoge Videosignal durch den Videoverstärker so gesteuert ist, um eine Weißfarbensättigung in dem dynamischen Bereich in der A/D-Wandlung zu verursachen.

6. Vorrichtung zur automatischen Luminanzregelung gemäß Anspruch 5, wobei ein Maximalwert eines dynamischen Bereichs in der A/D-Wandlung als der Vergleichswert benutzt wird.

7. Vorrichtung zur automatischen Luminanzregelung gemäß Anspruch 6, wobei die Luminanz des analogen Videosignals geregelt wird, so dass die Differenz zwischen der Videoanfangskoordinate und der Videoendkoordinate, welche durch die Verwendung des Vergleichswerts erhalten werden, minimal wird.

8. Ein Verfahren für das automatische Luminanzregeln (Schwarzwert und Amplitude) eines analogen Videosignals, welches in eine Videoanzeige eingegeben ist, wobei das Verfahren die Schritte aufweist:

Steuern (1) des Schwarzwerts und der Amplitude des analogen Videosignals;
Ausführen der A/D-Wandlung (2) des gesteuerten analogen Videosignals in ein digitales Videosignal;

**dadurch gekennzeichnet, dass** das Verfahren weiter aufweist:

Detektieren einer Videoanfangskoordinate (ST1) und einer Videoendkoordinate (ED1) auf der Videoanzeige durch Vergleichen von Luminanzdaten des digitalen Videosignals mit einem Vergleichswert; und
Steuern des Schwarzwerts und der Amplitude des analogen Videosignals, so dass eine Differenz zwischen der Videoanfangskoordinate und der Videoendkoordinate, welche in dem Detektionsschritt detektiert werden, ein vorbestimmter Wert wird.

9. Verfahren zur automatischen Luminanzregelung gemäß Anspruch 8, wobei in dem Steuerschritt ein Sägezahn-Wellensignal eingespeist wird und im Schwarzwert und der Amplitude gesteuert wird anstatt des analogen Videosignals.

10. Verfahren zur automatischen Luminanzregelung gemäß Anspruch 9, wobei ein Minimalwert eines dynamischen Bereichs in der A/D-Wandlung und ein willkürlicher Wert zwischen dem Minimalwert und einem Maximalwert des dynamischen Bereichs verwendet werden als der Vergleichswert.

11. Verfahren zur automatischen Luminanzregelung gemäß Anspruch 10, wobei der Schwarzwert so gesteuert wird, dass eine Differenz zwischen einer Videoanfangskoordinate und einer Videoendkoordinate, welche von dem Minimalwert des dynamischen Bereichs erhalten werden, ein erster vorbestimmter Wert wird, und die Amplitude so gesteuert wird, dass eine Differenz zwischen einer Videoanfangskoordinate und einer Videoendkoordinate, welche von dem willkürlichen Wert des dynamischen Bereichs erhalten werden, ein zweiter vorbestimmter Wert wird.

12. Verfahren zur automatischen Luminanzregelung gemäß Anspruch 10, wobei das analoge Videosignal so gesteuert wird, dass eine Weißfarbensättigung in dem dynamischen Bereich in der A/D-Wandlung verursacht wird.

13. Verfahren zur automatischen Luminanzregelung gemäß Anspruch 12, wobei ein Maximalwert eines dynamischen Bereichs in der A/D-Wandlung verwendet wird als der Vergleichswert.

14. Verfahren zur automatischen Luminanzregelung gemäß Anspruch 13, wobei die Luminanz des analogen Videosignals geregelt wird, so dass die Differenz zwischen der Videoanfangskoordinate und der Videoendkoordinate, welche durch das Verwenden des Vergleichwerts erhalten werden, minimal wird.

**Revendications**

1. Un dispositif d'ajustement automatique de luminance ajustant automatiquement la luminance (niveau de noir et amplitude) d'un signal vidéo analogique appliqué en entrée d'un afficheur vidéo, comprenant :

un amplificateur vidéo (1) pour commander le niveau de noir et l'amplitude du signal vidéo analogique ;
un convertisseur A/N (2) pour effectuer une conversion A/N d'une sortie de l'amplificateur vidéo (1) en un signal vidéo numérique ;

**caractérisé par** :

un circuit de détection de coordonnées (3) pour détecter une coordonnée de début vidéo (ST1 ) et une coordonnée de fin vidéo (ED1 ) sur l'afficheur vidéo en comparant les données de luminance du signal vidéo numérique à une valeur de comparaison ajustée ; et
un circuit de commande (5) pour ajuster et délivrer la valeur de comparaison au circuit de détection de cordonnées (3) afin d'obtenir la coordonnée de début vidéo et la coordonnée de fin vidéo, et commander l'amplificateur vidéo (1) de sorte qu'une différence entre la coordonnée de début vidéo (ST1) et la coordonnée de fin vidéo (ED1) devienne une valeur prédéterminée.

2. Le dispositif d'ajustement automatique de luminance selon la revendication 1, dans lequel un signal d'onde en rampe est appliqué à l'amplificateur vidéo (1 ) au lieu du signal vidéo analogique, et contrôlé en niveau de noir et en amplitude.

3. Le dispositif d'ajustement automatique de luminance selon la revendication 2, dans lequel une valeur minimale d'une plage dynamique de la conversion A/N et une valeur arbitraire entre la valeur minimum et la valeur maximum de la plage dynamique sont utilisées comme valeurs de comparaison.

4. Le dispositif d'ajustement automatique de luminance selon la revendication 3, dans lequel le niveau de noir est commandé de sorte qu'une différence entre une coordonnée de début vidéo et une coordonnée de fin vidéo obtenue à partir de la valeur minimale de la plage dynamique devienne une première valeur prédéterminée, et l'amplitude est commandée de sorte qu'une différence entre une coordonnée de début vidéo et une coordonnée de fin vidéo obtenues d'après la valeur minimale de la plage dynamique devienne une seconde valeur prédéterminée.

5. Le dispositif d'ajustement automatique de luminance selon la revendication 1, dans lequel le signal vidéo analogique est commandé par l'amplificateur vidéo d'une manière permettant d'obtenir une saturation de couleur du blanc dans la plage dynamique de la conversion A/N.

6. Le dispositif d'ajustement automatique de luminance selon la revendication 5, dans lequel une valeur maximale d'une plage dynamique dans la conversion A/N est utilisée comme valeur de comparaison.

7. Le dispositif d'ajustement automatique de luminance selon la revendication 6, dans lequel la luminance du signal vidéo analogique est ajustée de manière telle que la différence entre la coordonnée de début vidéo et la coordonnée de fin vidéo obtenues en utilisant la valeur de comparaison devienne minimale.

8. Un procédé d'ajustement automatique de la luminance (niveau de noir et amplitude) d'un signal vidéo analogique appliqué en entrée d'un afficheur vidéo, procédé comprenant les étapes consistant à :

    commander (1) le niveau de noir et l'amplitude du signal vidéo analogique ;
    effectuer une conversion A/N (2) du signal vidéo analogique commandé en un signal vidéo numérique ;

    caractérisé en ce que le procédé comprend en outre les étapes consistant à :

    détecter une coordonnée de début vidéo (ST1) et une coordonnée de fin vidéo (ED1 ) sur l'afficheur vidéo en comparant les données de luminance du signal vidéo numérique à une valeur de comparaison ; et

commander le niveau de noir et l'amplitude du signal vidéo analogique de sorte qu'une différence entre la coordonnée de début vidéo et la coordonnée de fin vidéo détectées à l'étape de détection devienne une valeur prédéterminée.

9. Le procédé d'ajustement automatique de la luminance selon la revendication 8, dans lequel à l'étape de contrôle, un signal d'onde en rampe est appliqué et contrôlé en niveau de noir et en amplitude au lieu du signal vidéo analogique.

10. Le procédé d'ajustement automatique de la luminance selon la revendication 9, dans lequel une valeur minimale d'une plage dynamique dans la conversion A/N et une valeur arbitraire entre la valeur minimum et la valeur maximum de la plage dynamique sont utilisées comme valeur de comparaison.

11. Le procédé d'ajustement automatique de la luminance selon la revendication 10, dans lequel le niveau de noir est commandé de sorte qu'une différence entre une coordonnée de début vidéo et une coordonnée de fin vidéo obtenue à partir de la valeur minimale de la plage dynamique devienne une première valeur prédéterminée, et l'amplitude est commandée de sorte qu'une différence entre une coordonnée de début vidéo et une coordonnée de fin vidéo obtenues d'après la valeur minimale de la plage dynamique devienne une seconde valeur prédéterminée.

12. Le procédé d'ajustement automatique de la luminance selon la revendication 10, dans lequel le signal vidéo analogique est commandé d'une manière permettant d'obtenir une saturation de couleur du blanc dans la plage dynamique dans la conversion A/N.

13. Le procédé d'ajustement automatique de la luminance selon la revendication 12, dans lequel une valeur maximale d'une plage dynamique dans la conversion A/N est utilisée comme valeur de comparaison.

14. Le procédé d'ajustement automatique de luminance selon la revendication 13, dans lequel la luminance du signal vidéo analogique est ajustée de manière telle que la différence entre la coordonnée de début vidéo et la coordonnée de fin vidéo obtenues en utilisant la valeur de comparaison devienne minimale.

EP 1 071 281 B1

F I G. 1

EP 1 071 281 B1

FIG. 2

_42_

DIGITAL VIDEO SIGNAL ———

REGION SETTING PULSE ———

421

422 D

423 ⊕

424 D

ACCUMULATION RESULT

EP 1 071 281 B1

FIG. 3

(a) TEST SIGNAL

90% LUMINANCE     10% LUMINANCE

(b) DISPLAY SCREEN

(c) REGION SETTING PULSE A

(d) DISPLAY SCREEN

(e) REGION SETTING PULSE B

(f) DISPLAY SCREEN

# F I G. 4

(a) CLOCK

(b) A/D CONVERTER OUTPUT
| 230 | 230 | 230 | 230 | 255 | 230 | 230 | 230 |

(c) REGION SETTING PULSE

(d) ACCUMULATION RESULT
| 0 | 230 | 460 | 690 | 920 | 1175 | 1405 | 1405 |

EP 1 071 281 B1

# FIG. 5

```
                    START

        SET PREDETERMINED DATA FOR
        CONTRAST AND BRIGHTNESS

  INCREASE CONTRAST                DECREASE CONTRAST
  ADJUSTMENT VALUE                 ADJUSTMENT VALUE

                    AV. 90
                 (AVERAGE LUMINANCE
  AVE90<230      DATA FOR REGION OF      AVE90>230
                  LUMINANCE 90%)
                      ?

                 AVE90=230

            SET 128 TO COMPARISON
            VALUE

  INCREASE BLACK LEVEL            DECREASE BLACK LEVEL
  ADJUSTMENT VALUE                ADJUSTMENT VALUE

                    AV. 10
                 (AVERAGE LUMINANCE
  AVE10<25       DATA FOR REGION OF      AVE10>25
                  LUMINANCE 10%)
                      ?

                 AVE10=25

               AV.90 (AVERAGE
         LUMINANCE DATA FOR REGION       No
          OF LUMINANCE 90%) IS
             228<AV.90<232
                  ?
                 Yes

                    END
```

# FIG. 6

ANALOG VIDEO SIGNAL → VIDEO AMPLIFIER (1) → ANALOG VIDEO SIGNAL → A/D CONVERTER (2) → 8 → DIGITAL VIDEO SIGNAL → TO DISPLAY CIRCUIT

BLACK LEVEL/AMPLITUDE CONTROL DATA

CONTROL CIRCUIT (5)

8

LUMINANCE COMPARISON VALUE

COORDINATE DETECTION CIRCUIT (3)

COORDINATE DATA

EP 1 071 281 B1

FIG. 7

EP 1 071 281 B1

F I G. 8

F I G. 9

F I G. 1 0

# F I G. 1 1

START

SET COMPARISON VALUE TO 255

SET CONTRAST TO MAXIMUM

DECREASE CONTRAST ADJUSTMENT VALUE

End ≦ Start ?

No

Yes

END

# FIG. 12